# EUROPÄISCHE PATENTSCHRIFT

(11) **EP 0 684 968 B1**
(45) Veröffentlichungstag und Bekanntmachung des Hinweises auf die Patenterteilung: **06.08.1997**
(21) Anmeldenummer: 94907537.8
(22) Anmeldetag: 10.02.1994
(51) Int. Cl.: C08J 9/00, C08G 18/10, C09K 3/30

(54) **PREPOLYMERZUSAMMENSETZUNG FÜR DÄMMSCHÄUME**
PREPOLYMER COMPOSITION FOR INSULATING FOAMS
COMPOSITION PREPOLYMERE POUR MOUSSES ISOLANTES

(30) Priorität: 10.02.1993 DE 4303849; 10.02.1993 DE 4303848
(43) Veröffentlichungstag der Anmeldung: 06.12.1995
(73) Patentinhaber: RATHOR AG, CH-9050 Appenzell (CH)
(72) Erfinder: PAULS, Mathias, CH-9050 Appenzell (CH); SCHUMACHER, René, CH-9403 Goldach (CH)
(74) Vertreter: Thiel, Christian, Dr. Dipl.-Chem.
(86) Internationale Anmeldenummer: EP9400383
(87) Internationale Veröffentlichungsnummer: WO9418265

(56) Entgegenhaltungen:
- EP-A- 0 118 171
- EP-A- 0 462 438
- EP-A- 0 480 342
- DE-A- 4 025 843
- DE-C- 3 837 351

## Beschreibung

Die Erfindung betrifft eine Prepolymerzusammensetzung zur Erzeugung von Polyurethandämmschäumen aus Druckbehältern, welche aus einer Prepolymerkomponente mit wenigstens einem PU-Prepolymer mit einem Gehalt an NCO-Gruppen von 4 bis 20 Gew.-% und üblichen Zusatzstoffen sowie einer Treibgaskomponente besteht. Die Erfindung betrifft ferner die Verwendung von Polybutadien als Zusatz zu Prepolymerzusammensetzungen für die Herstellung von 1K- und 2K-Polyurethandämmschäumen zur Steuerung der Zellöffnung und der Dimensionsstabilität sowie Druckdosen mit einer solchen Prepolymerzusammensetzung und gegebenenfalls einer davon getrennten Polyolkomponente zur Erzeugung von 1K- und 2K-Polyurethandämmschäumen.

Die erfindungsgemäße Prepolymerzusammensetzung dient zur Erzeugung von Polyurethandämmschäumen, die vor allem zu Dämmzwecken durch Ausschäumen von Hohlräumen eingesetzt werden. Hauptsächliche Anwendungsgebiete sind das Bauwesen, aber auch technische Produkte, bei denen Hohlräume zur Vermeidung von Schwitzwassernestern verfüllt werden müssen. Soweit Einkomponenten-Polyurethanschäume angesprochen sind, werden diese durch Ausbringen der Prepolymerzusammensetzung aus Druckbehältern, beispielsweise Aerosoldosen, mit Hilfe von Treibmitteln an Ort und Stelle mit einem Raumgewicht von 10 bis 50 g/l ausgebracht und verarbeitet. 1K-Schäume sind feuchtigkeitshärtend, d. h. sie können allein mit Hilfe der in der Luft enthaltenden Feuchtigkeit und Substratfeuchte aushärten.

Zweikomponenten-Polyurethanschäume benötigen zum Aushärten der Prepolymerzusammensetzung eine zweite hydroxylhaltige Komponente, in der Regel ein Polyol, das unmittelbar vor der Schaumbildung zugesetzt werden muß. Die Aushärtung kann durch Katalysatoren beschleunigt werden. Raumgewichte bei 2K-Schäumen liegen typischerweise bei 10 bis 100 g/l.

Übergangsformen zwischen 1K- und 2K-Schäumen sind möglich. In diesem Fall wird dem Prepolymer vor dem Ausbringen eine zur Umsetzung der Isocyanatgruppen nicht ausreichende Menge einer Hydroxylkomponente zugesetzt. Auch solche "1,5-K-Schäume" werden erfindungsgemäß erfaßt, ebenso solche Schäume, die mit mehr als nur einer separat zugesetzten Komponente erzeugt werden.

Herkömmliche Prepolymerzusammensetzungen für 1K- und 2K-Polyurethandämmschäume enthalten eine Prepolymerkomponente, die einen Mindestgehalt an reaktiven NCO-Gruppen aufweisen. Das Prepolymer selbst ist ein Polymer geeigneter Viskosität mit endständigen NCO-Gruppen. Die Zusammensetzung enthält eine mehr oder weniger große Menge an monomerem Isocyanat. Geeignete Isocyanate sind beispielsweise Isophorondiisocyanat, als IPDI bezeichnet, Tolylendiisocyanat, auch als TDI bezeichnet, Diisocyanatotoluol, 1,5-Diisocyanatonaphthalin, als NDI bezeichnet, Triisocyanatotri-methylmethan, 1,6-Diisocyanatohexan, als HDI bezeichnet, oder 4,4-Diisocyanatodiphenylmethan in roher und reiner Form oder als Gemisch. Besonders gebräuchlich ist 4,4-Diisocyanatodiphenylmethan, auch als MDI bezeichnet, das sowohl in roher Form (Roh-MDI) als auch in Form der reinen 2,4- und 4,4-Isomeren oder von deren Mischungen verwandt wird. Ebenso können die beiden gebräuchlichen TDI-Isomeren allein oder in Abmischung eingesetzt werden. Zur Herstellung der Prepolymerkomponente werden solche Isocyanate mit hydroxylgruppenhaltigen Polyethern, Polyestern oder mehrwertigen Alkoholen umgesetzt, wobei darauf geachtet wird, daß das Prepolymer eine für die Zusammensetzung geeignete Viskosität erhält.

Wie bereits angesprochen, enthalten zur Herstellung von Polyurethandämmschäumen aus Druckbehältern geeignete PU-Prepolymere einen Restgehalt an nicht umgesetztem momomerem Isocyanat, der bis zu 40 % betragen kann. Dieser Restgehalt ist zumeist herstellungsbedingt, aber auch erwünscht, da es sich gezeigt hat, daß sich dieser Restgehalt positiv auf die Gebrauchsfähigkeit, insbesondere auch die Form- und Dimensionsstabilität der damit erzeugten Schäume auswirkt. Andererseits gelten monomere Isocyanate, trotz ihrer in der Regel recht niedrigen Flüchtigkeit, wegen ihrer Toxizität als kennzeichnungspflichtige Gefahrenstoffe. Für MDI, das bevorzugte Ausgangsisocyanat für 1K-Schäume, gilt ein MAK-Wert von 500 ppm. Wegen der Toxizität der Inhaltsstoffe unterliegen Emballagen, die Rückstände dieser Prepolymere enthalten, kostenträchtigen Beschränkungen bei der Entsorgung.

Zwar ist es möglich, monomerarme oder auch im wesentlichen monomerfreie Prepolymere mit niedrigen Restmonomergehalten herzustellen, jedoch hat die geringe Gebrauchsfähigkeit, insbesondere das Schrumpfverhalten daraus hergestellter Schäume den Einsatz solcher Prepolymerzusammensetzungen bislang verhindert. Monomerarme Prepolymere können beispielsweise durch Entzug des Monomeren durch Destillation und ggf. weitere Umsetzung mit einem reaktiven hydroxylgruppenhaltigen Polyether und/oder Polyester und/oder Pflanzenöl, modifiziert wie unmodifiziert, hergestellt werden.

Angesichts der Nachteile bislang bekannter monomeres Isocyanat enthaltender PU-Prepolymerer wäre es wünschenswert, ein PU-Prepolymer bereitzustellen, das weniger monomeres Isocyanat als bisher enthält und trotzdem die vor allem von der Bauindustrie verlangte Dimensionsstabilität des Schaums gewährleistet. Insbesondere ist es Ziel der Erfindung, eine Prepolymerzusammensetzung für dimensionsstabile 1K- und 2K-PU-Schäume bereitzustellen, die toxische und/oder reizende Bestandteile in nur noch solch geringen Mengen enthält, die nicht mehr kennzeichnungspflichtig sind.

Des weiteren besteht ein Bedarf an die Dimensionsstabilität von Dämmschäumen fördernden Zusätzen, die sowohl bei monomerhaltigen wie monomerarmen und monomerfreien Prepolymeren eingesetzt werden können.

Dieses Ziel wird mit einer Prepolymerzusammensetzung der eingangs bezeichneten Art erreicht, die einen Gehalt von 0,01 bis 2 Gew.-%, bezogen auf die Prepolymerkomponente, an Polybutadien oder Copolymeren von 1,3-Butadien mit bis zu 50 Mol.% an anderen Dienen oder vinylaromatischen Verbindungen aufweist, wobei das Polybutadien oder das Copolymer ein Molekulargewicht von 1.000 bis 9.000 besitzt.

Durch den Zusatz einer geringen Menge an Polybutadien ist es möglich, das Dimensionsverhalten monomerarmer PU-Prepolymere zu verbessern und ein voll verschäumbares, im wesentlichen dimensionsstabiles und voll gebrauchsfähiges Dämmaterial zu erhalten. Das Polybutadien kann in Verbindung mit PU-Prepolymeren aus allen üblichen Isocyanaten eingesetzt werden, ist jedoch besonders vorteilhaft in Verbindung mit PU-Prepolymeren auf HDI- und MDI-Basis.

Als geeignete Polybutadiene können insbesondere flüssige Produkte eingesetzt werden, wie sie von der Firma Hüls AG mit einer Viskosität von wenigstens 500 mPa.s bei 20° C angeboten werden. Vorzugsweise beträgt die Viskosität wenigstens 2000 mPa.s bei 20° C und insbesondere etwa 3000 mPa.s bei 20° C. Besonders geeignet ist ein unter der Bezeichnung Polyöl 130 vertriebenes flüssiges Polybutadien mit etwa 75 % 1,4-cis-Doppelbindungen, etwa 24 % 1,4-trans-Doppelbindungen und etwa 1 % Vinyl-Doppelbindungen und einem Molekulargewicht (dampfdruckosmotisch) von etwa 3000. Der Gehalt an flüssigem Polybutadien beträgt erfindungsgemäß 0,01 bis 2 Gew.-% und vorzugsweise 0,05 bis 1 Gew.-%, jeweils bezogen auf die Prepolymerkomponente, der es zugemischt wird.

Geeignete Polybutadiene sind ferner solche Produkte höheren Molekulargewichts, die der Prepolymerzusammensetzung in gelöster Form zugesetzt werden können oder darin in Lösung gebracht werden können. Außerdem können höher molekulare polymere Kohlenwasserstoffe verwandt werden, die Doppelbindungen enthalten.

Das Molekulargewicht geeigneter stabilisierender Zusätze beträgt 1000 bis 9000, insbesondere bis 5000.

Neben reinem (flüssigem) Polybutadien können auch Copolymere von 1,3-Butadien mit anderen 1,3-Dienen verwandt werden, wie beispielsweise Isopren, 2,3-Dimethylbutadien und Piperylen, wie auch mit vinylaromatischen Verbindungen, etwa Styrol, α-Methylstyrol, Vinyltoluol und Divinylbenzol. Der Gehalt an Comonomeren in den Copolymerisaten soll 50 Mol-% nicht überschreiten. Derartige Copolymerisate werden, sofern sie flüssig oder löslich sind, als unter die Bezeichnung "(flüssiges) Polybutadien" fallend angesehen.

Es wird angenommen, daß die dimensionsstabilisierende Wirkung des Polybutadiens auf dessen Fähigkeit zur Vernetzung in Gegenwart von Sauerstoff beruht.

Für die Herstellung der erfindungsgemäß zum Einsatz kommenden Prepolymerzusammensetzung werden übliche aliphatische und aromatische Polyisocyanate verwandt.

Insbesondere werden dazu mehrfunktionelle Isocyanate mit dem Mittel 2 bis 4 Isocyanatgruppen eingesetzt, sowohl in monomerer als auch oligomerer Form. Wie eingangs festgehalten, sind diese Prepolymerzusammensetzungen selbst Reaktionsprodukte aus isocyanatgruppenhaltigen Monomeren oder Oligomeren und damit reaktiven Komponenten, insbesondere hydroxyfunktionellen Verbindungen. Als Ausgangs-Polyisocyanate kommen die eingangs genannten in Frage wie auch diejenigen, die beispielsweise in der DE-A-42 15 647 genannt sind.

Besonders geeignet für diese Prepolymerzusammensetzungen sind Isocyanat-Prepolymere auf Basis von HDI, trimerisiertem TDI, NDI, 4,4'-Dicyclohexylmethandiisocyanat und IPDI, die sich besonders einfach in monomerarme oder im wesentlichen monomerfreie Prepolymere überführen lassen. Es sei aber noch einmal darauf hingewiesen, daß der besondere Effekt der Förderung der Dimensionsstabilität nicht nur in Verbindung mit monomerarmen oder im wesentlichen monomerfreien Prepolymeren eintritt, sondern auch bei üblichen Prepolymerzusammensetzungen mit hohen Monomergehalten.

Der NCO-Gehalt in der zum Einsatz kommenden Prepolymerkomponente liegt zwischen 4 und 20 Gew.-%, vorzugsweise zwischen 6 und 18 Gew.-% und insbesondere zwischen 7 und 13 Gew.-%.

Bei der Herstellung der Isocyanat-Prepolymere kommen hierfür übliche hydroxylgruppenhaltige Komponenten zum Einsatz, beispielsweise Polyether, Polyester oder auch modifizierte Pflanzenöle mit einer ausreichenden OH-Zahl, etwa im Bereich von 100 bis 300. Ricinusöl mit einer OH-Zahl von etwa 160 ist geeignet, ebenso übliche Glykole, insbesondere Polyethylenglykole.

Das monomerreduzierte Prepolymer selbst ist beispielsweise durch Entzug des Monomeren in einem Dünnschichtverdampfer erhältlich. Alternativ oder zusätzlich kann (verbliebenes) Isocyanatmonomer mit einem hydroxylgruppenhaltigen Polyether und/oder Polyester und/oder modifiziertem Pflanzenöl umgesetzt werden. Geeignete Pflanzenöle sind solche mit einer OH-Zahl von 100 bis 300, beispielsweise Ricinusöl mit einer OH-Zahl von etwa 160. Erfindungsgemäß ist es ohne weiteres möglich, mit solcherart monomerreduzierten Prepolymerkomponenten stabile Schäume zu erzielen, sofern das Polybutadien zugesetzt wird. Als monomerarm wird eine Prepolymerzusammensetzung mit weniger als 10 % Monomer, insbesondere weniger als 5 % Monomer bezeichnet, als im wesentlichen monomerfrei eine solche mit weniger als 2, vorzugsweise weniger als 1 und insbesondere weniger als 0,5 Gew.-% Monomer, jeweils bezogen auf die Prepolymerkomponente, d. h. die in der Zusammensetzung vorliegende reaktive isocyanathaltige Komponente.

Geeignete Ausgangs-Prepolymere für erfindungsgemäße 1K- und 2K-Schäume auf MDI-Basis sind beispielsweise von der Firma Bayer unter der Bezeichnung Desmodur E21, E23, VP LS 2905 und VP LS 2924 erhältlich, die bereits relativ monomerarm eingestellt sind. Diese Materialien haben bislang in Prepolymerzusammensetzungen für Dämmschäume aus Druckdosen gemäß TRG 300 keinen Eingang gefunden.

Als ferner geeignet für erfindungsgemäße 1K- und 2K-Schäume haben sich Ausgangs-Prepolymere auf HDI-Basis gezeigt, wie sie beispielsweise von der Firma Bayer unter der Bezeichnung Desmodur DA und N 3400 angeboten werden. Diese weisen einen Restgehalt an monomerem HDI von weniger als 0,5 Gew.-% auf. Desmodur N 3400 ist ein dimeres HDI. Auch diese Materialien sind bislang bei der Druckdosen-Schaumherstellung nicht zum Einsatz gekommen.

Das Prepolymer kann übliche Zusatzstoffe enthalten, wie beispielsweise Polysiloxane zur Zellregulierung, Flammschutzmittel, Weichmacher, Katalysatoren, Viskositätsregulierer, Farbstoffe, rheologiesteuernde Zusätze und dergleichen. Zweckmäßigerweise hat die Prepolymerzusammensetzung, d. h. das PU-Prepolymer einschließlich aller Zusätze ohne Treibgase, eine Anfangs-Gebrauchsviskosität bei 20° C von 5000 bis 20000 mPa.s und vorzugsweise von 8000 bis 15000 mPa.s. Erfindungsgemäß liegt der Gehalt an NCO-Gruppen im PU-Prepolymer bei 4 bis 20 Gew.-%, vorzugsweise bei 6 bis 18 Gew.-% und insbesondere bei 7 bis 13 Gew.-%, jeweils bezogen auf das Prepolymer.

Die erfindungsgemäße Prepolymerzusammensetzung enthält insbesondere Propan, Butan und/oder Dimethylether als Treibgaskomponente. Als weitere Treibgase in der Komponente kommen Fluorkohlenwasserstoffe in Frage, die unter den in einem Druckbehälter herrschenden Druckbedingungen verflüssigbar sind, beispielsweise R 125, R 134a, R 143 und R 152a. Um den Anteil an brennbaren und halogenhaltigen Treibgasen niedrig zu halten, können weitere Gase zugesetzt werden, die unter den in der Druckdose herrschenden Druckbedingungen nicht kondensierbar sind, beispielsweise CO₂, N₂O oder N₂. Hiervon ist insbesondere CO₂ bevorzugt, da es sich z. T. in der Prepolymerkomponente lösen und dadurch zur Schaumbildung beitragen kann, daneben aber auch als gutes Treibmittel wirkt.

Die Treibgaskomponente der Prepolymerzusammensetzung macht zweckmäßigerweise 5 bis 40 Gew.-% aus. Der CO₂-Gehalt im Treibgas kann beispielsweise etwa 5 Gew.-%, bezogen auf die gesamte Treibgaskomponente, betragen. Der Gehalt an unter den herrschenden Druckbedingungen nicht kondensierbaren Gasen sollte so bemessen sein, daß das auf den Leerraum des Druckbehälters bezogene Volumen einen Druck von etwa 8 bis 10 bar ergibt, je nach der einschlägigen nationalen Vorschrift für Druckbehälter (Aerosoldosen). Der Leerraum des Druckbehälters ist der Raum, der von den nicht kondensierten Bestandteilen der Prepolymerzusammensetzung eingenommen wird.

Zweckmäßigerweise wird das flüssige Butadien der Prepolymerzusammensetzung in Lösung zusammen mit einem Emulgator - beispielsweise in einem Gewichtsverhältnis 80/20 - zugesetzt, vorzugsweise in Lösung mit einem hydroxylgruppenhaltigen Pflanzenöl, das geeignet ist, den Isocyanatgehalt des PU-Prepolymers zu steuern. Als hierfür besonders geeignet hat sich Ricinusöl mit einer OH-Zahl von 160 erwiesen, jedoch können beliebige andere hydroxylgruppenhaltige Pflanzenöle wie auch hydroxylgruppenhaltige Polyether und Polyester eingesetzt werden. Es handelt sich dabei um hydroxylgruppenhaltige Komponenten, wie sie üblicherweise bei der Formulierung von Prepolymerzusammensetzungen zur Modifizierung der Viskosität verwandt werden.

Die erfindungsgemäßen Prepolymerzusammensetzungen können als 1K- und als 2K-Polyurethanschäume eingesetzt werden. Bei 2K-Schäumen wird die zur Aushärtung des Schaums benötigte Polyolkomponente in bekannter Weise getrennt von der Prepolymerzusammensetzung gehalten und erst unmittelbar vor oder bei der Ausbringung zugesetzt. Die Verfahren hierzu sind vielfach beschrieben und dem Fachmann bekannt, ebenso dafür geeignete Zweikomponenten-Druckdosen mit einem separaten Behälter für die zweite Komponente.

Als zweite Komponente kommen insbesondere übliche Polyole in Frage, insbesondere Glykol, Glycerin und Butandiol. Zur Beschleunigung der Aushärtungsreaktion kann es zweckmäßig sein, dieser zweiten Komponente einen üblichen Katalysator zuzusetzen, beispielsweise Zinndioctoat, Kobaltnaphthenat und -octoat, Dibutylzinndilaurat, Metall-, insbesondere Eisenacetonylacetat, DABCO kristallin und N-Methyl-2-azanorbornan. Weitere Katalysatoren sind Triethylendiamin, Trimethylaminoethylpiperazin, Pentamethyldiethylentriamin, Tetramethyliminobispropylamin, Bis(dimethylaminopropyl)-N-isopropanolamin. Ferner geeignet sind heteroaromatische Amine, wie sie beispielsweise in der DE-A-42 15 647 genannt sind.

Die Erfindung betrifft schließlich die Verwendung von flüssigem Polybutadien, wie oben definiert, als Zusatz zu Isocyanat-Prepolymerzusammensetzungen für 1K- und 2K-Polyurethandämmschäume zur Steuerung der Zellöffnung und der Dimensionsstabilität. Die Erfindung betrifft ferner Druckdosen zur Ausbringung von 1K- und 2K-Polyurethandämmschäumen mit einer Prepolymerzusammensetzung und gegebenenfalls einer davon getrennten Polyolkomponente, wie vorstehend beschrieben.

Abgesehen von der bereits erwähnten Dimensionsstabilität der mit dem Zusatz an flüssigem Polybutadien hergestellten erfindungsgemäßen Prepolymerzusammensetzung besitzt diese als weiteren Vorteil, daß sie im wesentlichen frei von Chlor und Brom hergestellt und feuerhemmend eingestellt werden kann, ohne daß übliche halogenhaltige Flammenschutzmittel zugesetzt werden müssen. Dies heißt, daß auf den Zusatz von Flammschutzmitteln für B2-Schäume nach DIN 4102 weitgehend oder vollständig verzichtet werden kann. Dies ist insbesondere dann der Fall, wenn die Zusammensetzung Phosphor enthaltende Verdünner oder Weichmacher (Viskositätsregulierer) enthält, beispielsweise Triethylphosphat. Eine synergistische Wirkung mit diesen Weichmachern haben N-haltige Zusätze und Pflanzenöle, etwa Ricinusöl. Falls erforderlich, können die Prepolymerzusammensetzungen auch im wesentlichen halogenfrei eingestellt werden, d. h. neben halogenhaltigen Flammschutzmitteln kann auch auf Fluorkohlenwasserstoffe als Treibgase verzichtet werden. In diesem Fall ist es ausreichend, daß die Treibgaskomponente Propan, Butan, Dimethylether und/oder CO₂ enthält.

Es hat sich gezeigt, daß diese flammhemmenden Eigenschaften insbesondere den Trialkyl- und Triarylphosphaten und -phosphonaten zukommen. Genannt werden können Diphenylkresylphosphat, Triphenylphosphat, Triethylphosphat, Dimetylmethanphosphonat, und dergleichen. Ferner können genannt werden 2-Ethylhexyldiphenylphosphat und Phosphorsäure-1,3-phenylentetraphenylester, welche unter den Bezeichnungen Posflex 362 und Fyroflex RDP im Handel erhältlich sind. Solche Phosphate und Phosphonate können in einer Menge von 5 bis 40 Gew.-%, bezogen auf die Prepolymerkomponente, in der Prepolymerzusammensetzung zugegen sein. Sie haben den Vorteil, daß sie das in der Prepolymerzusammensetzung austarierte Gleichgewicht aus Prepolymer, Treibmittel und Verdünnern nicht stören, sondern vielmehr stabilisieren, während herkömmliche halogenhaltige Flammschutzmittel in dieses Gleichgewicht eingreifen und nur zu etwa 12 bis 14 Gew.-% zugegen sein können.

Die erfindungsgemäße Prepolymerzusammensetzung wird auf dem Fachmann an und für sich bekannte Weise hergestellt, wobei bei Verwendung von monomerarmem Prepolymer dieses als solches in den Druckbehälter gegeben wird oder dort entsteht. Dem Prepolymer wird dann das flüssige Polybutadien, etwa in Abmischung mit einem Tensid und emulgiert in einem hydroxyhaltigen Öl, beispielsweise Ricinusöl, zugesetzt. Das hydroxylhaltige Öl bzw. Ricinusöl dient gleichzeitig der Feineinstellung des NCO-Gehalts des Prepolymeren und der Herabsetzung des Monomergehalts. Anschließend werden die Zusatzstoffe, wie Flammschutzmittel, Stabilisatoren, Weichmacher, Katalysatoren, etc. zugesetzt, wonach der Druckbehälter (Aerosoldose) verschlossen und das Treibmittel aufgedrückt oder eingepreßt wird.

Die Erfindung wird durch die nachfolgenden Zusammensetzungen erläutert.

### Beispiel 1

Desmodur E21 als Prepolymer wird unter Schutzgas mit einer 1 %-igen Emulsion eines flüssigen Polybutadiens mit einem Molekulargewicht von etwa 3000 und einer Viskosität bei 20° C von 3000 mPa.s und einem Tensid als Emulgator (Gewichtverhältnis 80/20; erhältlich von der Fa. Goldschmidt unter der Bezeichnung TEGO IMR 830) in Ricinusöl mit einer Hydroxylzahl von 160 versetzt, wobei die Temperatur sorgfältig kontrolliert wird. Anschließend werden übliche Polysiloxane zur Stabilisierung und kolloidales Kieselgel zur Steuerung der Rheologie zusammen mit einem Aminkatalysator (Texacat DMDEE, 2,2-Dimorpholinodiethylether) zugesetzt.

Unter ständigem Rühren wird die gewünschte Menge des zuvor beschriebenen Gemisches in einen feuchtigkeitsfreien Druckbehälter gegeben und, gegebenenfalls unter Einbringung einer Patrone mit der zweiten Komponente, mit einem mit Ventil versehenen Dom verschlossen. Nach dem Verschließen wird eine abgestimmte Menge Treibgas aufgedrückt. Zweckmäßigerweise werden die einzelnen Komponente der Treibgasmischung nacheinander aufgedrückt und gegebenenfalls in einem zweiten Durchgang noch einmal aufgefüllt. Besonders geeignet ist eine Mischung aus 40 % Propan, 40 % Butan und 20 % Dimethylether in Verbindung mit einem Fluorkohlenwasserstoff (R 152a und R 134a) und CO₂.

Nachstehend sind eine monomerreduziert eingestellte Prepolymerzusammensetzung und Füllanteile für einen Druckbehälter mit einem Füllgrad von 75 % angegeben. Die Zusammensetzung ergibt einen Dämmschaum mit guter Dimensionsstabilität und guten Dämmeigenschaften. Der Gehalt an Restmonomer der Zusammensetzung liegt unter 10 Gew.-%.

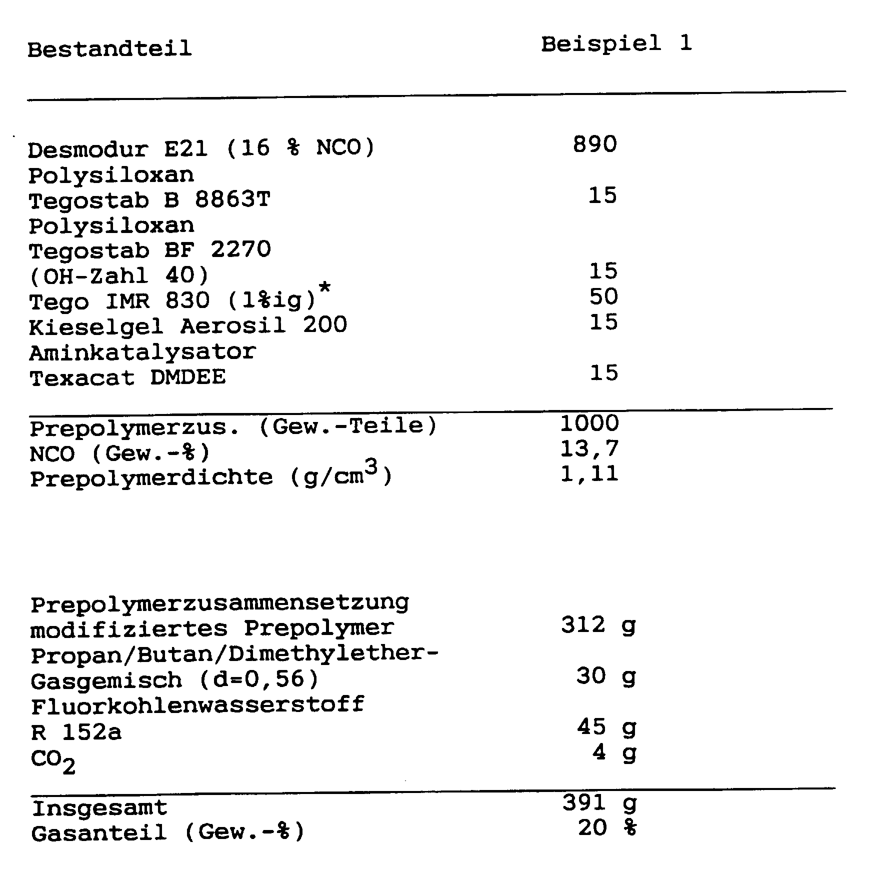

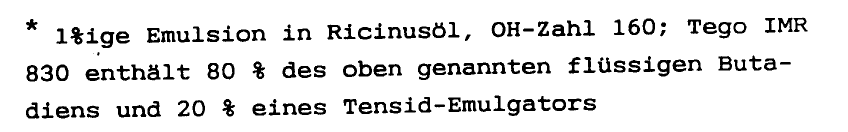

### Beispiele 2 und 3

Erfindungsgemäße Prepolymerzusammensetzungen unter Verwendung herkömmlicher Ausgangs-Isocyanate wurden nach folgenden Rezepturen analog zu Beispiel 1 hergestellt. Die Zusammensetzungen ergeben einen Dämmschaum mit guter Dimensionsstabilität und guten Dämmeigenschaften. Der Gehalt an Restmonomer in den Zusammensetzungen liegt bei 7 Gew.-%.

In der Liste bezeichnen Desmophen PU 1578 ein Polyol mit der OH-Zahl 213 und Desmodur 44 V 20 L ein Polyisocyanat mit 31,6 Gew.-% NCO-Gruppen. Disflamoll DPK bezeichnet einen Weichmacher auf Diphenylkresylphosphatbasis. Das Flammschutzmittel Fyroflex RDP bezeichnet Phosphorsäure-1,3-phenylentetraphenylester.

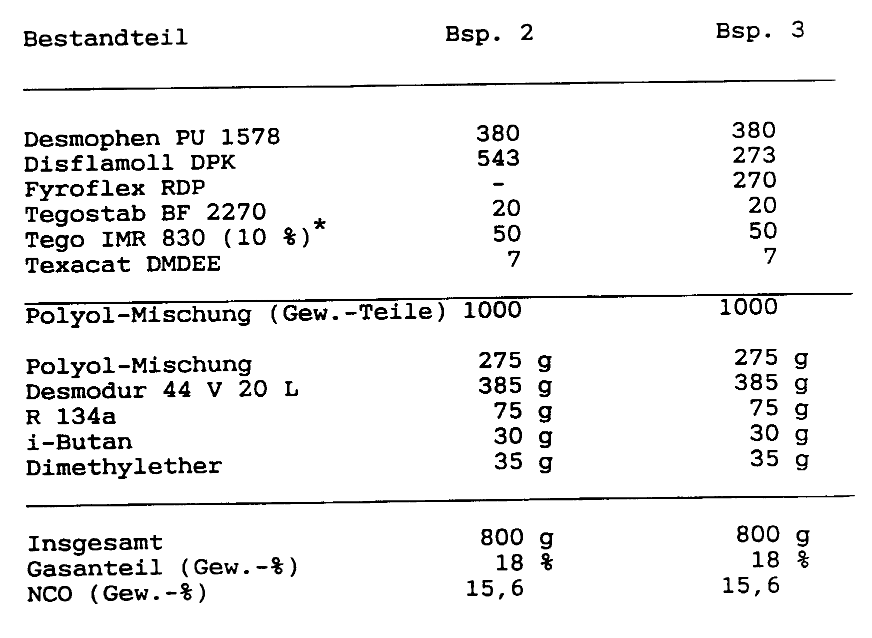

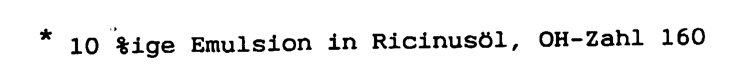

### Beispiele 4 bis 6

Erfindungsgemäße Prepolymerzusammensetzungen unter Verwendung herkömmlicher Ausgangs-Isocyanate wurden nach folgenden Rezepturen analog zu den Beispielen 1 bis 3 hergestellt. Die Zusammensetzungen ergeben einen Dämmschaum mit guter Dimensionsstabilität und guten Dämmeigenschaften. Der Gehalt an Restmonomer in den Zusammensetzungen liegt unter 10 Gew.-%.

In der Liste bezeichnet Desmodur VPLS 2924 ein Prepolymer mit einem Isocyanatgehalt von 24,0 %, Firemaster 836 ein handelsübliches Flammschutzmittel und die Gasmischung eine Treibgasmischung aus 30 % Propan, 30 % Isobutan und 40 % Dimethylether.

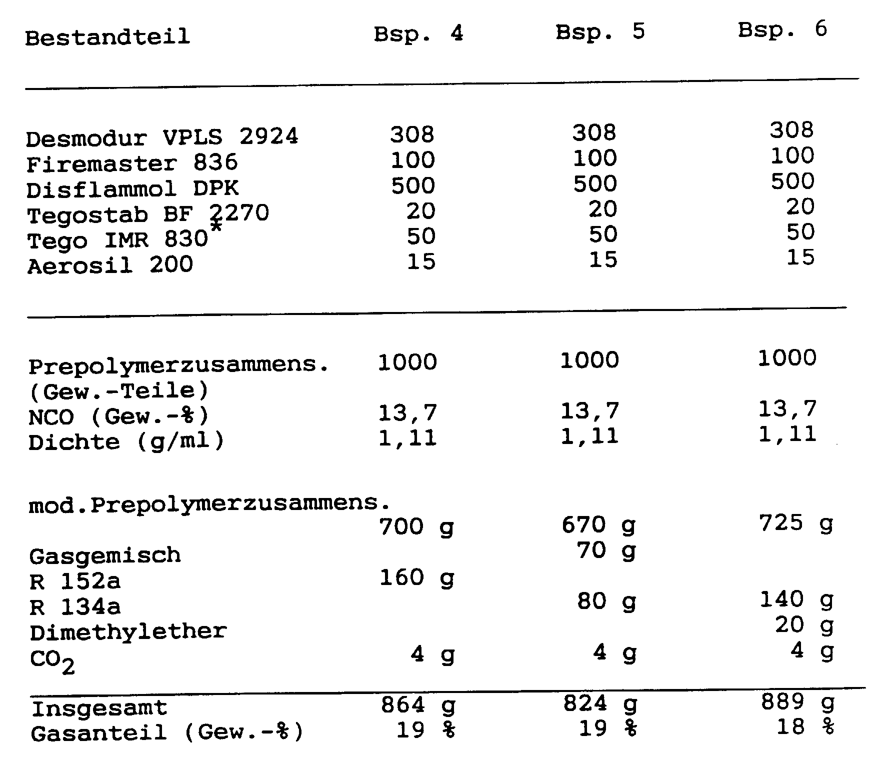

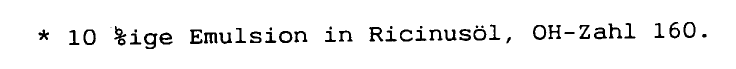

### Beispiel 7

Eine Zusammensetzung für 1,5K-Schäume wurde wie folgt erstellt.

| Bestandteil | Gew.-Teile |
|---|---|
| Ricinusöl | 320 |
| Weichmacher | 420 |
| Levagard PP (TMCP) | |
| Ixol M 125 | 170 |
| Tego IMR 830 (10 %) | 50 |
| Tegostab B 1048 | 30 |
| Katalysator | 10 |
| Polyolkomponente | 1000 |
| Polyolkomponente | 142 g |
| Desmodur N 3400 | 181 g |
| Treibgas R 134a | 30 g |
| R 152a | 60 g |
| DME | 10 g |
| Vernetzer: Ethylenglykol | 12 g |
| Thancat AN 10 | 5g |
| Gesamt | 427 g |
| NCO (Gew.-%) | 3,86 |

Desmodur N 3400 ist ein aliphatisches HDI-Polyisocyanat mit 20 % NCO. Ixol M 125 ist ein Polyesterpolyol mit einer OH-Zahl von 239. TMCP bezeichnet Trismonochlorisopropylphosphat.

## Patentansprüche

1. Prepolymerzusammensetzung zur Erzeugung von Polyurethandämmschäumen aus Druckbehältern, welche aus einer Prepolymerkomponente mit wenigstens einem PU-Prepolymer mit einem Gehalt an NCO-Gruppen von 4 bis 20 Gew.-% und üblichen Zusatzstoffen, sowie einer Treibgaskomponente besteht, gekennzeichnet durch einen Gehalt von 0,01 bis 2 Gew.-%, bezogen auf die Prepolymerkomponente, an Polybutadien oder Copolymeren von 1,3-Polybutadien mit bis zu 50 Mol.% an anderen Dienen oder vinylaromatischen Verbindungen, wobei das Polybutadien oder das Copolymer ein Molekulargewicht von 1.000 bis 9.000 besitzt.

2. Prepolymerzusammensetzung nach Anspruch 1, gekennzeichnet durch ein PU-Prepolymer auf Basis von aliphatischen und aromatischen Polyisocyanaten und hydroxygruppenhaltige Reaktionskomponenten.

3. Prepolymerzusammensetzung nach Anspruch 2, dadurch gekennzeichnet, daß das Polyisocyanat eines auf Basis von Hexamethylen-1,6-diisocyanat, Naphthalin-1,5-diisocyanat, Tolylendiisocyanat, Isophorondiisocyanat, Diphenylmethandiisocyanat oder Dicyclohexylmethandiisocyanat ist.

4. Prepolymerzusammensetzung nach einem der vorstehenden Ansprüche, gekennzeichnet durch einen Gehalt an flüssigem Polybutadien von 0,02 bis 1 Gew.-%.

5. Prepolymerzusammensetzung nach Anspruch 4, dadurch gekennzeichnet, daß das flüssige Polybutadien etwa 75 % 1,4-cis-Doppelbindungen, etwa 24 % 1,4-trans-Doppelbindungen und etwa 1 % Vinyl-Doppelbindungen enthält, ein Molekulargewicht, bestimmt durch Dampfdruckosmose, von etwa 3000 und eine Viskosität bei 20° C von etwa 3000 mPa.s hat.

6. Prepolymerzusammensetzung nach einem der vorstehenden Ansprüche, gekennzeichnet durch einen Treibgasgehalt von 5 bis 40 Gew.-%.

7. Prepolymerzusammensetzung nach einem der vorstehenden Ansprüche, dadurch gekennzeichnet, daß die Treibgaskomponente Propan, Butan und/oder Dimethylether enthält.

8. Prepolymerzusammensetzung nach einem der vorstehenden Ansprüche, dadurch gekennzeichnet, daß die Treibgaskomponente Fluorkohlenwasserstoff, insbesondere R 125, R 134a, R 143 und/oder R 152a, enthält.

9. Prepolymerzusammensetzung nach einem der vorstehenden Ansprüche, dadurch gekennzeichnet, daß die Treibgaskomponente CO₂ enthält.

10. Prepolymerzusammensetzung nach Anspruch 9, gekennzeichnet durch einen CO₂-Gehalt von etwa 5 Gew.-%, bezogen auf die Treibgaskomponente.

11. Prepolymerzusammensetzung nach einem der vorstehenden Ansprüche, gekennzeichnet durch eine Anfangs-Gebrauchsviskosität des PU-Prepolymers bei 20° C von 5000 bis 20000 mPa.s.

12. Prepolymerzusammensetzung nach Anspruch 11, gekennzeichnet durch eine Anfangs-Gebrauchsviskosität des PU-Prepolymers von 8000 bis 15000 mPa.s.

13. Verwendung von flüssigem Polybutadien als Zusatz zu Prepolymerzusammensetzungen zur Herstellung von 1K- und 2K-Polyurethandämmschäumen zur Steuerung der Zellöffnung und der Dimensionsstabilität.

14. Prepolymerzusammensetzung nach einem der Ansprüche 1 bis 12, enthalten in einer Druckdose zur Ausbringung von 1K-Polyurethandämmschäumen.

15. Prepolymerzusammensetzung nach einem der Ansprüche 1 bis 12, enthalten in einer Druckdose zur Ausbringung von 1,5K- und 2K-Polyurethandämmschäumen, die wenigstens eine davon getrennte weitere Komponente enthält.

## Claims

1. A prepolymer composition for producing polyurethane insulating foams from pressure tanks which consists of a prepolymer component with at least one PU prepolymer with a content of NCO groups of 4 to 20 wt% and usual additives, as well as a propellant compenent, characterized by a content of 0.01 to 2 wt%, based on the prepolymer component, of polybutadiene or copolymers of 1,3-polybutadiene with up to 50 mol% of other dienes or vinylaromatic compounds, the polybutadiene or copolymer having a molecular weight of 1,000 to 9,000.

2. The prepolymer composition of claim 1, characterized by a PU prepolymer based on aliphatic and aromatic polyisocyanates and hydroxy group containing reaction components.

3. The prepolymer composition of claim 2, characterized in that the polyisocyanate is one based on hexamethylene-1,6-diisocyanate, naphthalene-1,5-diisocyanate, tolylene diisocyanate, isophorone diisocyanate, diphenylmethane diisocyanate or dicyclohexylmethane diisocyanate.

4. The prepolymer composition of any of the above claims, characterized by a content of liquid polybutadiene of 0.02 to 1 wt%.

5. The prepolymer composition of claim 4, characterized in that the liquid polybutadiene contains about 75% 1,4-cis double bonds, about 24% 1,4-trans double bonds and about 1% vinyl double bonds, has a molecular weight, determined by vapor-pressure osmosis, of about 3000 and a viscosity at 20 °C of about 3000 mPa.s.

6. The prepolymer composition of any of the above claims, characterized by a propellant content of 5 to 40 wt%.

7. The prepolymer composition of any of the above claims, characterized in that the propellant component contains propane, butane and/or dimethylether.

8. The prepolymer composition of any of the above claims, characterized in that the propellant component contains fluorocarbon, in particular R 125, R 134a, R 143 and/or R 152a.

9. The prepolymer composition of any of the above claims, characterized in that the propellant component contains CO₂.

10. The prepolymer composition of claim 9, characterized by a CO₂ content of about 5 wt%, based on the propellant component.

11. The prepolymer composition of any of the above claims, characterized by an initial service viscosity of the PU prepolymer at 20 °C of 5000 to 20000 mPa.s.

12. The prepolymer composition of claim 11, characterized by an initial service viscosity of the PU prepolymer of 8000 to 15000 mPa.s.

13. Use of liquid polybutadiene as an additive to prepolymer compositions for producing 1C and 2C polyurethane insulating foams for controlling cell opening and dimensional stability.

14. The prepolymer composition of any of claims 1 to 12, contained in a pressurized can for the expulsion of 1C polyurethane insulating foams.

15. Prepolymer composition of any of claims 1 to 12, contained in a pressurized can for the expulsion of 1.5C and 2C polyurethane insulating foams containing at least one additional component separated therefrom.

## Revendications

1. Composition de prépolymère pour la production de mousses isolantes de polyuréthane à partir de récipients à pression, qui consiste en un composant prépolymère ayant au moins un prépolymère de PU ayant une teneur en groupes NCO de 4 à 20 % en masse et des additifs habituels, et en un composant gaz propulseur, caractérisée par une teneur de 0,01 à 2 % en masse, par rapport au composant prépolymère, de polybutadiène ou de copolymères de polybuta-1,3-diène avec jusqu'à 50 mol % d'autres diènes ou de composés vinylaromatiques, le polybutadiène ou le copolymère possédant une masse moléculaire de 1000 à 9 000.

2. Composition de prépolymère selon la revendication 1, caractérisée par un prépolymère de PU à base de polyisocyanates aliphatiques et aromatiques et de composants réactionnels contenant des groupes hydroxyle.

3. Composition de prépolymère selon la revendication 2, caractérisée en ce que le polyisocyanate est un polyisocyanate à base d'hexaméthylène-1,6-diisocyanate, de naphtalène-1,5-diisocyanate, de toluylènediisocyanate, d'isophoronediisocyanate, de diphénylméthanediisocyanate ou de dicyclohexylméthanediisocyanate.

4. Composition de prépolymère selon l'une des revendications précédentes, caractérisée par une teneur en polybutadiène liquide de 0,02 à 1% en masse.

5. Composition de prépolymère selon la revendication 4, caractérisée en ce que le polybutadiène liquide contient environ 75 % de doubles liaisons 1,4-cis, environ 24 % de doubles liaisons 1,4-trans et environ 1 % de doubles liaisons vinyliques, présente une masse moléculaire, déterminée par osmose à pression de vapeur, d'environ 3 000 et une viscosité à 20°C d'environ 3 000 mPa.s.

6. Composition de prépolymère selon l'une des revendications précédentes, caractérisée par une teneur en gaz propulseur de 5 à 40 % en masse.

7. Composition de prépolymère selon l'une des revendications précédentes, caractérisée en ce que le composant gaz propulseur contient du propane, du butane et/ou du diméthyléther.

8. Composition de prépolymère selon l'une des revendications précédentes, caractérisée en ce que le composant gaz propulseur contient un hydrocarbure fluoré, en particulier R 125, R 134a, R 143 et/ou R 152a.

9. Composition de prépolymère selon l'une des revendications précédentes, caractérisée en ce que le composant gaz propulseur contient CO₂.

10. Composition de prépolymère selon la revendication 9, caractérisée par une teneur en CO₂ d'environ 5 % en masse par rapport au composant gaz propulseur.

11. Composition de prépolymère selon l'une des revendications précédentes, caractérisée par une viscosité d'utilisation initiale du prépolymère de PU à 20°C de 5 000 à 20 000 mPa.s.

12. Composition de prépolymère selon la revendication 11, caractérisée par une viscosité d'utilisation initiale du prépolymère de PU de 8000 à 15 000 mPa.s.

13. Utilisation de polybutadiène liquide comme additif pour des compositions de prépolymère pour la préparation de mousses isolantes de polyuréthane à un composant et à deux composants pour commander l'ouverture des alvéoles et la stabilité dimensionnelle.

14. Composition de prépolymère selon l'une des revendications 1 à 12 contenue dans une boîte à pression pour la distribution de mousses isolantes de polyuréthane à un composant.

15. Composition de prépolymère selon l'une des revendications 1 à 12 contenue dans une boîte à pression pour la distribution de mousses isolantes de polyuréthane à 1,5 composants et à 2 composants qui contient au moins un autre composant séparé de celle-ci.
